Europäisches Patentamt

European Patent Office

Office européen des brevets

(19)

(11) Veröffentlichungsnummer : **0 212 273**
**B1**

(12) **EUROPÄISCHE PATENTSCHRIFT**

(45) Veröffentlichungstag der Patentschrift :
07.03.90

(21) Anmeldenummer : 86109864.8

(22) Anmeldetag : 18.07.86

(51) Int. Cl.⁵ : **D 03 C   1/00, F 16 D  11/00**

(54) **Schaftsteuervorrichtung einer Webmaschine.**

(30) Priorität : 08.08.85 DE 3528504

(43) Veröffentlichungstag der Anmeldung :
04.03.87 Patentblatt 87/10

(45) Bekanntmachung des Hinweises auf die Patenterteilung : 07.03.90 Patentblatt 90/10

(84) Benannte Vertragsstaaten :
CH DE FR GB IT LI

(56) Entgegenhaltungen :
EP--A-- 0 050 160
EP--A-- 0 078 752
CH--A--   512 605
FR--A-- 2 563 246.

(73) Patentinhaber : Kaiser GmbH & Co. KG
Ritter-von-Eitzenberger-Strasse 13
D-8580 Bayreuth (DE)

(72) Erfinder : Surkamp, Paul
Auf dem Zanger 27
D-4152 Kempen (DE)
Erfinder : Szücs, Ferdinand
Hopfenweg 10
D-4156 Willich 4 (DE)

(74) Vertreter : Patentanwälte Grünecker, Kinkeldey,
Stockmair & Partner
Maximilianstrasse 58
D-8000 München 22 (DE)

## Beschreibung

Die Erfindung betrifft eine Schaftsteuervorrichtung einer Webmaschine mit einem intermittierend drehbaren Antriebselement, das eine Aussparung aufweist, in die ein mit einer Exzenterscheibe verbundenes Kupplungselement einkuppelbar ist, welches das intermittierend drehbare Antriebselement mit der Exzenterscheibe verbindet, die in einer Kurbelstange rotierbar gelagert ist, welche eine Wirkverbindung zum Schaft besitzt, und mit einem steuerbaren Verriegelungselement zur Verriegelung des Kupplungselementes in seiner eingekuppelten Stellung.

Aus der EP-A-50 160 ist bereits eine Schaftsteuervorrichtung einer Webmaschine der eingangs erwähnten Art bekannt, bei der das Auskuppeln des Kupplungselementes durch Einschwenken des Endes des Hebelarmes in die Bewegungsbahn des Kupplungselementes bewirkt wird. Bei dieser bekannten Anordnung ist ein Verriegelungselement in Form eines doppelarmigen Hebels vorgesehen, der durch eine Feder im Uhrzeigersinn vorgespannt ist und mit einem seiner Hebelarme gegen einen Fortsatz des Kupplungselementes anliegt und dieses in seiner eingekuppelten Stellung hält. Nachteilig bei dieser Anordnung ist jedoch, daß dieses Verriegelungselement aus seiner Verriegelungsstellung verschwenkt wird, wenn das Verriegelungselement über eine entsprechende Auslauffläche läuft. Da einerseits das Lösen des Verriegelungselementes und andererseits das Einschwenken des Hebelarms in die Bewegungsbahn des Fortsatzes des Kupplungselementes zu verschiedenen Zeiten erfolgt, kann hier nicht die Forderung erfüllt werden, daß das Verriegelungselement nur in der Totpunktlage entriegelt wird. Ebenso ist es als nachteilig anzusehen, daß ein Auskuppeln des Kupplungselementes nur während einer Drehung des Exzenters erfolgen kann.

Bei Schaftsteuervorrichtungen wird das Kupplungselement beim Entkuppeln entweder schon dann in Bewegung gesetzt, wenn der Stillstand des Antriebselementes und der Exzenterscheibe noch nicht erreicht ist, oder es wird die zum Auskuppeln erforderliche Kraft von außen her erst dann auf das Kupplungselement übertragen, wenn Antriebselement und Exzenterscheibe stillstehen.

Beides ist nachteilig und begrenzt die Schaftsteuergeschwindigkeit entweder durch lange Stillstandszeiten oder durch die zunehmende Gefahr von Fehlsteuerungen mit wachsender Steuergeschwindigkeit.

Die Erfindung soll hier Abhilfe bringen. Der Erfindung liegt die Aufgabe zugrunde, eine Schaftsteuervorrichtung zu schaffen, die eine große Steuergeschwindigkeit bei geringer Neigung zu Fehlsteuerungen ermöglicht.

Gemäß der Erfindung wird diese Aufgabe durch die kennzeichnenden Merkmale des Anspruchs 1 gelöst.

Durch die erfindungsgemäße Vorrichtung wird es ermöglicht, daß exakt in einer Winkelstellung des Antriebselementes und der Exzenterscheibe sowohl das Verriegelungselement gelöst wie aus das Kupplungselement ausgekuppelt werden kann. Beim Umsteuern von der Tieffachstellung in die Hochfachstellung oder umgekehrt kann nunmehr lange vor dem Erreichen der Totpunktlage beziehungsweise Nullstellung beziehungsweise des Stillstands die Umsteuerung erfolgen und die zum Auskuppeln erforderliche Kraft von außen her auf das Kupplungselement aufgebracht werden. Ist dann die Totpunktlage beziehungsweise der Stillstand des Antriebselements und der Exzenterscheibe erreicht, wird nur noch mit geringer Kraft das steuerbare Verriegelungselement umgeschaltet, um das bis dahin arretierte Kupplungselement zu entriegeln, das dann in kürzester Zeit und ohne Kräfte zu übertragen auskuppeln kann. Ein schleifendes und aus diesem Grund mit verhältnismäßig großem Verschleiß behaftetes Entkuppeln ist weder erforderlich noch möglich. Es ist auch nicht mehr erforderlich, zum Vermeiden eines derartigen Verschleißes zu warten, bis der Stillstand erreicht ist, und dann erst die zum Auskuppeln erforderliche Kraft von außen her auf das Kupplungselement zu übertragen, was die Umschaltzeit unnötig verlängern und außerdem wiederum erhöhten Verschleiß, jetzt jedoch an anderen Teilen, mit sich bringen würde. Außerdem wäre in diesem Fall das Durchlaufen der Totpunktlage ohne Stillstand nicht möglich.

Bei einer Vorrichtung nach der Erfindung muß die zum Auskuppeln erforderliche Kraft auch nicht schlagartig aufgebracht werden, sondern es kann dies sanft geschehen, wodurch unter anderem auch die Lärmentwicklung geringer ist.

Wenn nach einer weiteren Ausbildung der Erfindung das Verriegelungselement durch das gleiche Schaltelement steuerbar ist, welches das Kupplungselement von der Einkuppelstellung in die Auskuppelstellung bewegt, dann ist nicht nur die richtige Reihenfolge von Aufheben der Verriegelung und Entkuppeln gewährleistet, auch die Umsteuerzeit ist auf ein Minimum begrenzt.

Weitere vorteilhafte Ausbildungen der Erfindung sind in den weiteren Unteransprüchen beschrieben.

An zwei Ausführungsbeispielen soll die Erfindung näher erläutert und beschrieben werden.

Fig. 1 zeigt eine erste Schaftsteuervorrichtung in eingekuppeltem Zustand.

Fig. 2 zeigt die gleiche Schaftsteuervorrichtung in ausgekuppeltem Zustand.

Fig. 3 zeigt eine zweite Schaftsteuervorrichtung in eingekuppeltem Zustand.

Fig. 4 zeigt die in Fig. 3 dargestellte Schaftsteuervorrichtung in ausgekuppeltem Zustand.

Fig. 5 zeigt einen Schnitt längs der in Fig. 1 gezeichneten Linie V-V.

Fig. 6 zeigt einen Schnitt längs der in Fig. 4 gezeichneten Linie VI-VI.

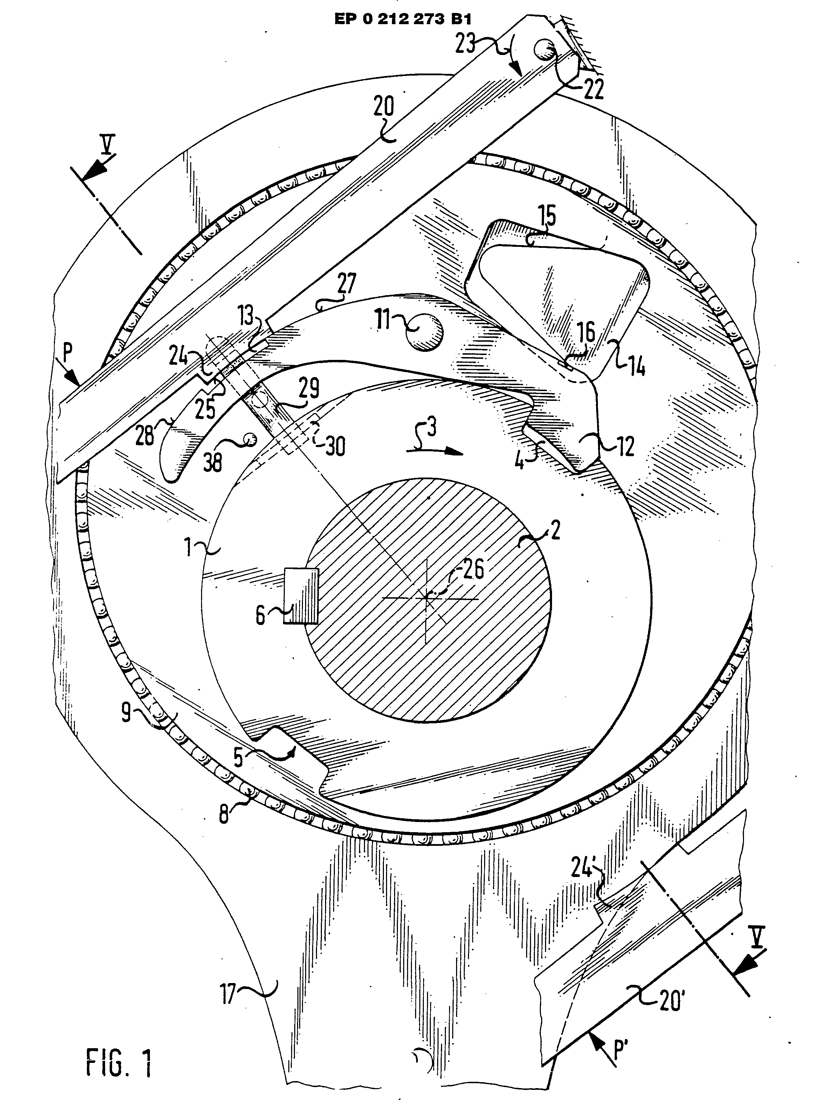

Bei dem ersten Ausführungsbeispiel einer Schaftsteuervorrichtung nach den Fig. 1, 2 und 5 sitzt ein ringförmiges Antriebselement 1 drehfest auf einer Welle 2, die mit Hilfe einer hier nicht dargestellten Antriebsvorrichtung intermittierend in Richtung des Pfeils 3 um 180 Grad weiterdrehbar ist. Nach jeder Drehung um 180 Grad steht die Welle 2 in der Totpunktlage kurzzeitig still, um sich dann wieder um 180 Grad weiterzudrehen. Das Antriebselement 1 besitzt zwei gegenüberliegende Ausparungen 4 und 5. Ein Keil 6 stellt die Verbindung zwischen Welle 2 und Antriebselement 1 her.

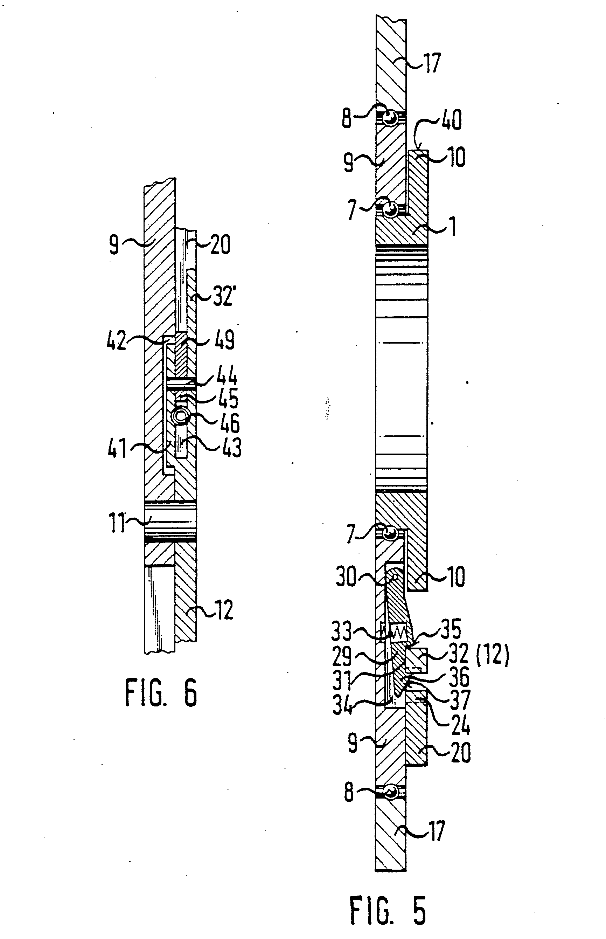

Insbesondere Fig. 5 läßt erkennen, daß auf dem Antriebselement 1 mit Hilfe eines Wälzlagers 7 eine Exzenterscheibe 9 drehbar gelagert ist. Dabei übergreift ein Rand 10 des Antriebselements 1 zum Teil die Exzenterscheibe 9. Die erwähnten Aussparungen 4 und 5 befinden sich im Rand 10 des Antriebselements 1.

Die Exzenterscheibe 9 ist mit einem Bolzen 11 versehen, auf dem ein Kupplungselement 12 schwenkbar gelagert ist. Das Kupplungselement 12 ist klinkenartig ausgebildet und paßt in die Aussparungen 4 und 5. Es bildet das eine Ende eines zweiarmigen Hebels, dessen anderes Ende eine nach außen hin geöffnete Zahnlücke 13 besitzt. In einer Aussparung 14 der Exzenterscheibe 9 ist eine gebogene Blattfeder 15 gelagert, deren hochgebogenes Ende 16 das Kupplungselement 12 so belastet, daß es in eine der beiden Aussparungen 4 oder 5 des Antriebselements 1 einrasten kann.

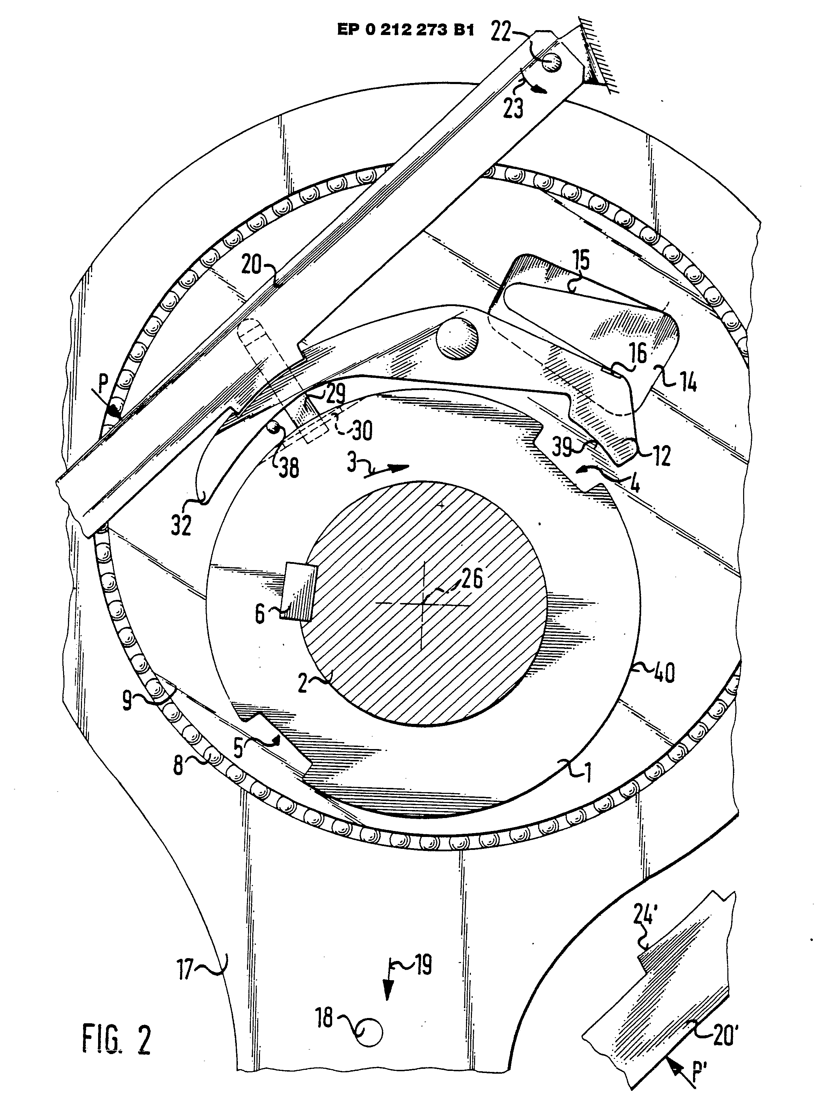

In eingekuppeltem Zustand verbindet das Kupplungselement 12 das intermittierend drehbare Antriebselement 1 mit der Exzenterscheibe 9. Die Exzenterscheibe 9 ist mit Hilfe eines weiteren Wälzlagers 8 in einer Kurbelstange 17 rotierbar gelagert. Sofern das Kupplungselement 12 eingekuppelt ist, verschiebt sich bei einer Drehung des Antriebselements 1 in Richtung des Pfeils 3 um 180 Grad ein Gelenkpunkt 18 der Kurbelstange 17 parallel zur Richtung des Pfeils 19 (Fig. 2) um das Maß der Exzentrizität der Exzenterscheibe 9. Der Gelenkpunkt 18 hat über hier nicht dargestellte Gestänge eine Verbindung zu einem Schaft beziehungsweise Schaftrahmen einer Webmaschine, so daß dieser Schaft oder Schaftrahmen aus einer Hochfachstellung heraus nach Drehen des Antriebselements 1 um 180 Grad in eine Tieffachstellung gebracht werden kann. Jedesmal stehen dabei das Antriebselement 1, die Exzenterscheibe 9, die Kurbelstange 17 und der Gelenkpunkt 18 in der Totpunktlage und die am Gelenkpunkt 18 wirkenden Kräfte sind auf die Mittelachse 26 der Welle 2 oder von der Mittelachse 26 der Welle 2 weg gerichtet.

Zum Zweck des Umschaltens des Kupplungselements 12 ist ein mustergemäß steuerbares Schaltelement 20 vorhanden. Das Schaltelement 20 stellt sich als ein Hebel dar, der um einen Drehpunkt 22 schwenkbar ist und mustergemäß geschwenkt und dabei durch eine Kraft P belastet werden kann. Mustergemäß kann der Hebel 20 auch entlastet und gegen die Richtung des Pfeils 23 um den Drehpunkt 22 geschwenkt werden.

Das Schaltelement beziehungsweise der Hebel 20 ist mit einem Schaltzahn 24 versehen, der formschlüssig zur Zahnlücke 13 des Kupplungselements 12 paßt. Am Ende des Schaltzahns 24 ist eine Gleitfläche 25 vorhanden, die konzentrisch zur Mittelachse 26 der Welle 2 angeordnet ist. In der in Fig. 1 gezeigten Stellung liegt die Gleitfläche 25 auf einer Gleitfläche 27 des zweiten Hebelarms des Kupplungselements 12 auf, die ebenfalls konzentrisch zur Mittelachse 26 der Welle 2 verläuft. Der zweite Hebelarm des Kupplungselements 12 besitzt noch eine weitere zu der Gleitfläche 25 des Schaltelements 20 passende Gleitfläche 28, die ebenfalls konzentrisch zur Mittelachse 26 den Welle 2 verläuft.

Unter Bezugnahme auf Fig. 1 sei angenommen, die Welle 2 und damit auch das Antriebselement 1 bewege sich in Richtung des Pfeils 3, um beim Weiterdrehen um ungefähr 5 Grad die Totpunktlage zur erreichen beziehungsweise zum Stillstand zu kommen. Mustergemäß ist bereits jetzt das Schaltelement 20 durch die Kraft P belastet, so daß die zum Auskuppeln erforderliche Kraft P von außen her bereits dadurch, daß die Gleitfläche 25 gegen die Gleitfläche 27 drückt, auf das Kupplungselement 12 übertragen wird.

Es ist aber dafür gesorgt, daß das Kupplungselement 12 nur in der Totpunktlage des intermittierend drehbaren Antriebselements 1 und der Exzenterscheibe 9 von der Einkuppelstellung nach Fig. 1 in die Auskuppelstellung nach Fig. 2 bewegbar und bis zur Totpunktlage des Antriebselements 1 und der Exzenterscheibe 9 durch ein steuerbares Verriegelungselement 29 gegen jede Lageänderung in Richtung auf das Verlassen der Einkuppelstellung gesichert ist.

Insbesondere Fig. 5 läßt erkennen, daß das Verriegelungselement 29 als eine Sperrklinke ausgebildet ist. Die Sperrklinke 29 ist an der Exzenterscheibe 9 mit Hilfe eines Stiftes 30 schwenkbar gelagert. Sie besitzt eine Aussparung 31, welche in der in Fig. 5 dargestellten Sperrstellung den zweiten Hebelarm 32 des Kupplungselements 12 unter der Wirkung einer Feder 33 umgreift. Da die Sperrklinke 29 in einer Vertiefung 34 der Exzenterscheibe 29 gelagert ist, kann sie gesteuert gegen die Kraft der Feder 33 ganz in die Vertiefung 34 eingeschwenkt werden, so daß sie dann den Hebelarm 32 beziehungsweise das Kupplungselement 12 freigibt.

In der in Fig. 5 dargestellten Sperrstellung verhindert eine die Aussparung 31 begrenzende Nase 35 eine Bewegung des Hebelarms 32 in Richtung auf das Auskuppeln des Kupplungselements 12. An der anderen Seite ist die Aussparung 31 durch einen Schaltfortsatz 36 begrenzt, der eine Auflaufschräge 37 besitzt.

Erst wenn die Stillstands-Nullstellung beziehungsweise Totpunktlage erreicht ist, gleitet der Schaltzahn 24 in die Zahnlücke 13, wobei er auf die Auflaufschräge 37 aufläuft, die dabei ausweicht und das Verriegelungselement 29 zum Entriegeln zwingt. Dann erst ist der Schaltzahn 24 des Schaltelements 20 in der Lage, in die Zahnlücke 13 ganz einzudringen und zum Zweck des Auskuppelns das Kupplungselement 12 gegen den Uhrzeigersinn um den Bolzen 11 zu schwenken. Dies geschieht gegen die Kraft der Blattfeder 15.

Fig. 2 zeigt das Kupplungselement 12 im ausgekuppeltem Zustand und das Schaltelement 20, das durch die Kraft P belastet ist, in einer Stellung, in der es am weitesten um den Drehpunkt 22 gegen den Uhrzeigersinn geschwenkt ist. Ein weiteres Schwenken des Schaltelements 20 ist nicht möglich, weil der zweite Hebelarm 32 des Kupplungselements 12 sich gegen einen mit der Kurvenscheibe 9 verbundenen Anschlagstift 38 gelegt hat. Die nun erreichte Hochfachstellung bleibt bestehen, weil beim Weiterdrehen des Antriebselements 1 die Exzenterscheibe 9 nicht mitgenommen wird.

Damit durch Reibungskräfte auch keine unbeabsichtigte Mitnahme der Exzenterscheibe 9 erfolgt, kann die Totpunktlage, beziehungsweise die jeweils erreichte Stellung, also die Hochfachstellung beziehungsweise Tieffachstellung, durch federnde Rastmittel, beispielsweise eine hier nicht dargestellte Kugelrastvorrichtung, gesichert werden. Eine solche Stellungssicherung kann beispielsweise zwischen Exzenterscheibe 9 und Kurbelstange 17 oder zwischen Kurbelstange 17 und einem gestellfestem Teil vorgesehen sein. Auch am Schaftgestänge oder am Schaftrahmen kann eine solche Lagesicherung in Form einer Schnappverbindung vorhanden sein.

Wenn das Kupplungselement 12 aus der Stellung nach Fig. 2 heraus wieder eingekuppelt werden soll, so geschieht dies dadurch, daß mustergemäß gesteuert das Schaltelement 20 gegen die Wirkung der Kraft P im Uhrzeigersinn zurückgeschwenkt wird, während sich das Antriebselement 1 noch in Bewegung befindet. Unter der Wirkung der Blattfeder 15 legt sich dann eine Gleitfläche 39 des Kupplungselements 12 gegen den Rand 40 des Antriebselements 1 an. Erreicht das Antriebselement daraufhin die Totpunktlage, beziehungsweise die Stillstands-Nullstellung, so rastet das Kupplungselement 12 in eine der beiden Aussparungen 4 oder 5 ein, wobei zugleich automatisch eine Stellungsverriegelung durch das Verriegelungselement 29 vorgenommen wird.

Zum Zweck des Umsteuerns ist dem Schaltelement 20 gegenüber ein zweites Schaltelement 20', versehen mit einem Schaltzahn 24', vorgesehen. Durch hier nicht dargestellte Parallelführungen ist dafür gesorgt, daß beide Schaltelemente beziehungsweise Hebel 20 und 20' stets parallel liegen und gleichzeitig und gleichsinnig operieren. Das Schaltelement 20' ist durch eine Kraft P' belastet.

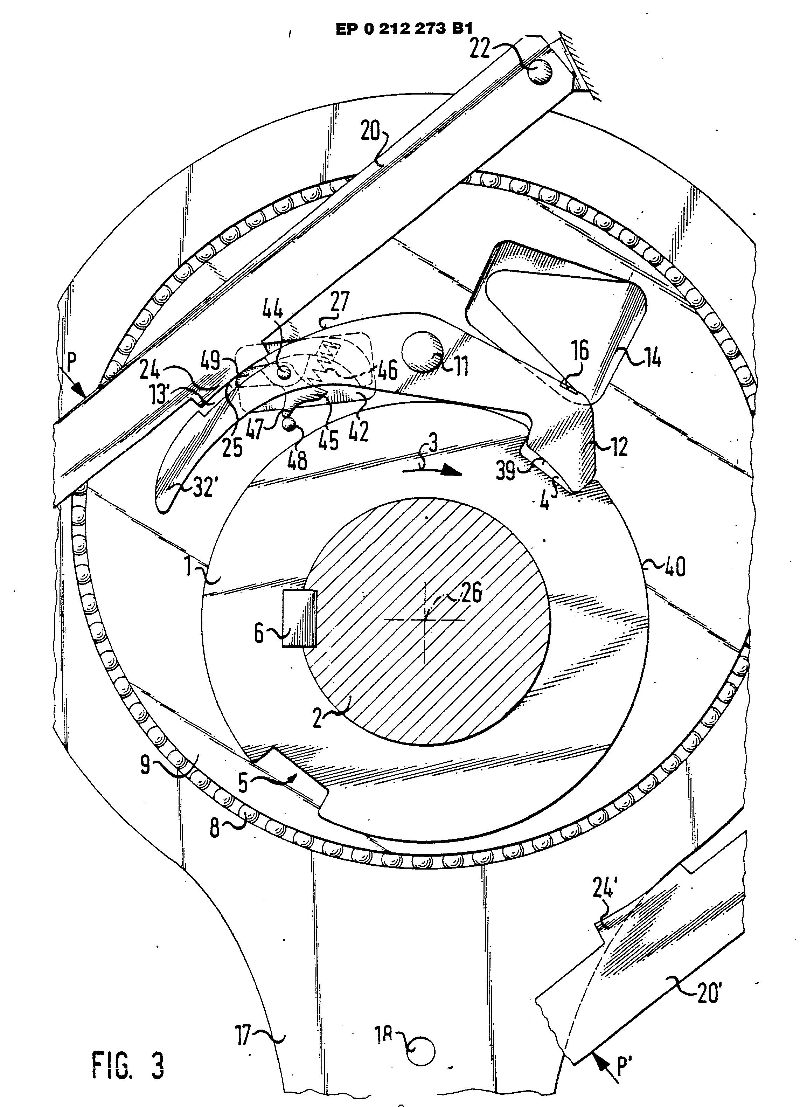

Das zweite Ausführungsbeispiel der Erfindung nach den Fig. 3, 4 und 6 unterscheidet sich vom ersten Ausführungsbeispiel durch folgendes:

Der zweite Hebelarm 32' des Kupplungselements 12 ragt mit einem in die Tiefe gehenden Fortsatz 41 in eine Vertiefung 42 der Kurvenscheibe 9 hinein. Zwischen dem Fortsatz 41 und dem Hebelarm 32' ist gemäß Fig. 6 ein Schlitz 43 ausgebildet, in dem mittels eines Stiftes 44 ein Verriegelungselement 45 schwenkbar gelagert ist. Das Verriegelungselement 45 ist als eine durch eine Feder 46 belastete Sperrklinke ausgebildet, die sich in der Sperrstellung mit einem Fuß 47 gemäß Fig. 3 gegen einen an der Exzenterscheibe 9 vorhandenen Butzen 48 abstüzt. Das Verriegelungselement beziehungsweise die Sperrklinke 45 weist einen Schaltfortsatz 49 auf, der an der Zahnlücke 13' des Hebelarms 32' vorragt. Er versperrt dabei dem Schaltzahn 24 des Schaltelements 20 den Weg, wenn der Schaltzahn ganz in die Zahnlücke 13' eindringen will.

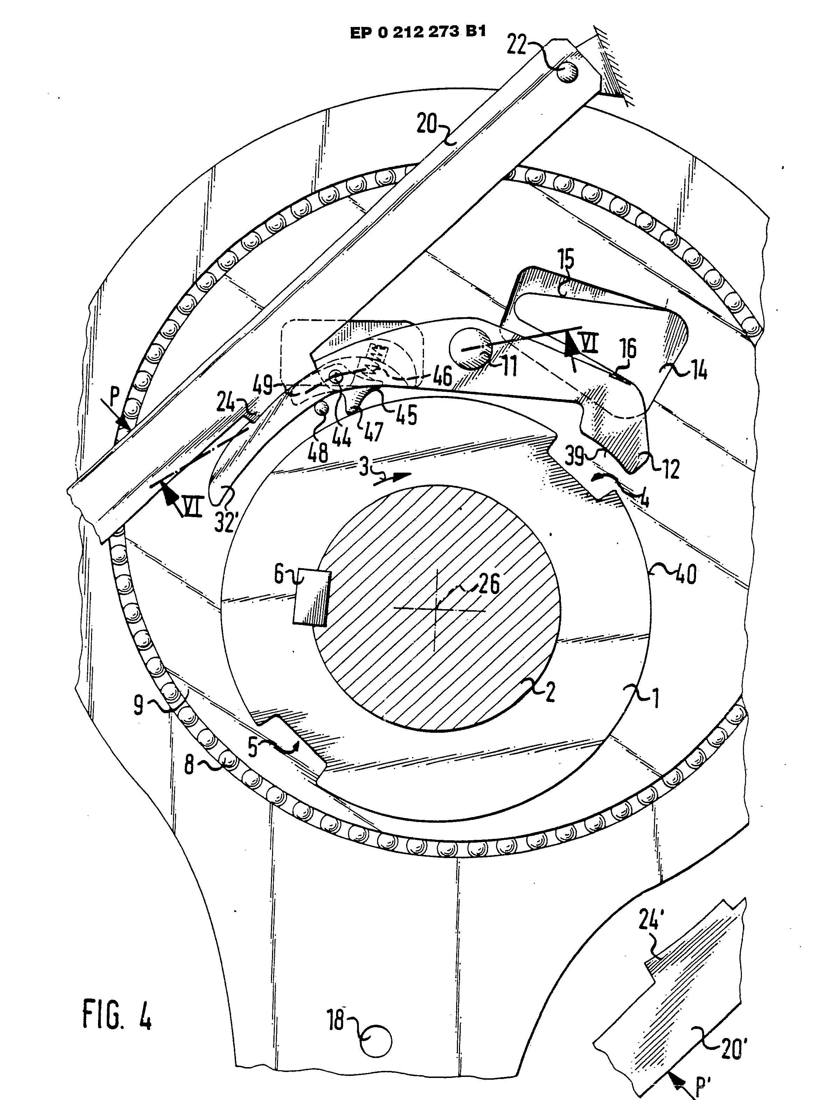

Gemäß Fig. 3 befindet sich das Antriebselement 1 noch in Richtung des gebogenen Pfeils 3 in Bewegung, während das Kupplungselement 12 eingekuppelt und in der Einkuppelstellung mit Hilfe des Verriegelungselements 45 verriegelt ist. Der Schaltzahn 24 gleitet mit seiner Gleitfläche 25 noch auf der Gleitfläche 27 des Hebelarms 32'. Der Gelenkpunkt 18 hat noch nicht ganz die Hochfachstellung erreicht. Dies ist erst dann der Fall, wenn sich das Antriebselement 1 um etwa 5 Grad weitergedreht hat. Dann verliert der Schaltzahn 24 seine Auflage auf der Gleitfläche 27, belastet unter der Wirkung der Kraft P zunächt den Schaltfortsatz 49, wobei das Verriegelungselement 45 um den Stift 44 schwenken muß, so daß der Fuß 47 seine Auflage und Abstützung an den Butzen 48 verliert und dadurch die Verriegelung des Kupplungselements 12 aufgehoben wird. Erst dann ist das Schaltelement 20 in der Lage, den zweiten Hebelarm 32' zu schwenken, bis er an den Butzen 48 zur Anlage kommt, wie es Fig. 4 zeigt.

Die Hochfachstellung ist jetzt erreicht und bleibt erhalten, solange das Kupplungselement 12 ausgekuppelt bleibt.

Soll wieder eingekuppelt werden, wird das Schaltelement 20 mustergemäß im Uhrzeigersinn um den Drehpunkt 32 zurückgeschwenkt, so daß sich die Gleitfläche 39 des Kupplungselements 12 gegen den Rand 40 des rotierenden Antriebselements 1 anlegen kann, bis das Kupplungselement 12 schließlich unter der Wirkung der Blattfeder 15 in der nächstfolgenden Totpunktlage beziehungsweise Stillstands-Nullstellung des Antriebselements 1 in eine der beiden Aussparungen 4 beziehungsweise 5 einrastet. Setzt sich daraufhin das Antriebselement 1 in Richtung des Pfeils 3 wieder in Bewegung, wird die Kurvenscheibe 9 und mit ihr auch die Kurbelstange 17 mitgenommen, so daß in die Tieffachstellung umgeschaltet werden kann.

Auch bei dieser Ausbildung ist wie beim ersten Ausführungsbeispiel ein parallel operierendes zweites Schaltelement 20' mit einem zweiten Schaltzahn 24' vorgesehen.

Es bleibt noch anzumerken, daß die Erfindung einen rechtsdrehenden Betrieb in Richtung des gebogenen Pfeils 3 und auch einen linksdrehenden Betrieb gegen die Richtung des Pfeils 3 ermöglicht. Die Erfindung soll nicht auf die dargestellten und beschriebenen Ausführungsbeispiele eingeschränkt sein.

**Patentansprüche**

1. Schaftsteuervorrichtung einer Webmaschine mit einem intermittierend drehbaren Antriebselement (1), das eine Aussparung (4, 5) aufweist, in die ein mit einer Exzenterscheibe (9) verbundenes Kupplungselement (12) einkuppelbar ist, welches das intermittierend drehbare. Antriebselement (1, 2) mit der Exzenterscheibe (9) verbindet, die in einer Kurbelstange (17) rotierbar gelagert ist, welche eine Wirkverbindung zum Schaft besitzt, und mit einem steuerbaren Verriegelungselement (29, 45) zur Verriegelung des Kupplungselementes (12) in seiner eingekuppelten Stellung, dadurch gekennzeichnet, daß das Verriegelungselement (29, 45) nur in der Totpunktlage des intermittierend drehbaren Antriebselementes (1) und der Exzenterscheibe (9) lösbar ist, so daß das Kupplungselement (12) von der Einkuppelstellung in die Auskuppelstellung bewegbar und bis zum Erreichen der Totpunktlage durch das Verriegelungselement (29, 45) gegen jede Lageänderung in Richtung auf das Verlassen der Einkuppelstellung gesichert ist, und daß mindestens ein mustergemäß steuerbares Schaltelement (20, 20') die zum Auskuppeln erforderliche Kraft von außen her schon dann auf das Kupplungselement (12) überträgt, wenn sich das intermittierend drehbare Antriebselement (1) und die Exzenterscheibe (9) noch außerhalb der Totpunktlage in Bewegung befinden.

2. Schaftsteuervorrichtung nach Anspruch 1, dadurch gekennzeichnet, daß das Verriegelungselement (29, 45) durch das gleiche Schaltelement (20, 20') steuerbar ist, welches das Kupplungselement (12) von der Einkuppelstellung in die Auskuppelstellung bewegt.

3. Schaftsteuervorrichtung nach Anspruch 2, dadurch gekennzeichnet, daß das Schaltelement (20, 20') einen Schaltzahn (24, 24') aufweist, das Kupplungselement (12) eine formschlüssig zum Schaltzahn (24, 24') passende Zahnlücke (13, 13') besitzt, die so angeordnet ist, daß der Schaltzahn (24, 24') nur dann in die Zahnlücke (13, 13') hinein bewegbar ist, wenn die Exzenterscheibe (9) die Totpunktlage einnimmt, und daß ein das Verriegelungselement (29, 45) entriegelnder Schaltfortsatz (36, 49) an der Zahnlücke (13, 13') derartig vorragt, daß er zwangsläufig durch den Schaltzahn (24, 24') bewegt werden muß, sobald der Schaltzahn (24, 24') in die Zahnlücke (13, 13') eindringt.

4. Schaftsteuervorrichtung nach Anspruch 3, dadurch gekennzeichnet, daß das Verriegelungselement (45) als eine federbelastete Sperrklinke ausgebildet ist, die am Kupplungselement (12) schwenkbar gelagert ist und sich in der Sperrstellung mit einem Fuß (47) gegen einen an der Exzenterscheibe (9) vorhandenen Butzen (48) abstützt, wobei der Fuß (47) durch Betätigen des Schaltfortsatzes (49) vom Butzen (48) fortschwenkbar ist.

5. Schaftsteuervorrichtung nach Anspruch 3, dadurch gekennzeichnet, daß das Verriegelungselement (29) als eine federbelastete Sperrklinke ausgebildet ist, die an der Exzenterscheibe (9) schwenkbar gelagert ist und sich in der Sperrstellung mit einer Nase (35) gegen das Kupplungselement (12) abstützt und einen Schaltfortsatz (36) mit einer Auflaufschräge (37) besitzt, auf die der Schaltzahn (24, 24') des Schaltelements (20, 20') aufläuft, sobald er in die Zahnlücke (13, 13') eindringt, wobei die Nase (35) ihre Abstützstellung verliert. . . .

**Claims**

1. Heald shaft control device of a weaving loom having an intermittently drivable driving element (1) which has a slot (4, 5) into which a coupling element (12) can be coupled which is connected to an eccentric disc (9) and couples the intermittently drivable driving element (1, 2) to the eccentric disc (9), which is rotatably mounted in a connecting rod (17) which has an operative connection to the heald shaft, and having a controllable locking element (29, 45) for locking the coupling element (12) in its coupled position, characterized in that the locking element (29, 45) is releasable only in the dead centre position of the intermittently rotatable driving element (1) and of the eccentric disc (9), with the result that the coupling element (12) can be moved from the coupling position into the uncoupling position and, until the dead centre position is reached, is secured by the locking element (29, 45) against any change in position in a direction towards leaving the coupling position, and that at least one switching element (20, 20') controllable in accordance with the pattern transmits onto the coupling element from outside the force required for uncoupling already then, when the intermittently rotatable driving element (1) and the eccentric disc (9) are still in motion outside the dead centre position.

2. Heald shaft control device according to Claim 1, characterized in that the locking element (29, 45) is controllable by the same switching element (20, 20') which moves the coupling element (12) from the coupling position into the uncoupling position.

3. Heald shaft control device according to Claim 2, characterized in that the switching element (20, 20') has a switching tooth (24, 24'), the coupling element (12) has a tooth space (13, 13') which positively matches the switching tooth (24, 24') and is arranged in such a way that the switching tooth (24, 24') can only be moved into the tooth space (13, 13') when the eccentric disc (9) assumes the dead centre position, and that a switching extension (36, 49) which unlocks the locking element (29, 45) protrudes in such a way at the tooth space (13, 13') that it is necessarily positively moved by the switching tooth (24, 24') as soon as the switching tooth (24, 24') penetrates into the tooth space (13, 13').

4. Heald shaft control device according to Claim 3, characterized in that the locking element (45) is designed as a spring-loaded pawl which is mounted to swivel on the coupling element (12) and, in the blocking position is supported by a foot (47) against a dog (48) present of the eccentric disc (9), it being possible to swivel the foot (47) away from the dog (48) by actuating the switching extension (49).

5. Heald shaft control device according to Claim 3, characterized in that the locking element (29) is designed as a spring-loaded pawl which is mounted to swivel on the eccentric disc (9) and, in the blocking position, is supported by a nose (35) against the coupling element (12) and has a switching extension (36) having a run-on slope (37) onto which the switching tooth (24, 24') of the switching element (20, 20') runs as soon as it penetrates into the tooth space (13, 13'), the nose (35) losing its supporting position.

## Revendications

1. Dispositif de commande du cadre d'un métier à tisser comportant un élément moteur (1) pivotant de manière discontinue et qui présente un évidement (4, 5) dans lequel est embrayable un élément d'accouplement (12) relié à un disque excentré (9), cet élément d'accouplement reliant l'élément moteur (1, 2) pivotant en discontinu au disque (9) monté pivotant dans une bielle (17) relié fonctionnellement au cadre, ainsi qu'un élément de blocage (29, 45) pour le verrouillage de l'élément d'accouplement (12) dans sa position embrayée, caractérisé en ce que l'élément de blocage (29, 45) n'est libérable que pour la position de point mort de l'élément moteur (1) et du disque excentré (9), de sorte que l'élément d'accouplement (12) peut passer de la position embrayée à la position débrayée, en étant maintenu par l'élément de blocage (29, 45) jusqu'à ce que le point mort soit atteint, contre toute modification de position tendant à lui faire quitter la position embrayée, et en ce qu'au moins un élément de commutation (20, 20') pouvant être commandé en fonction du dessin, transmet extérieurement à l'élément d'accouplement (12) la force nécessaire au débrayage, pendant que l'élément moteur (1) et le disque excentré (9) sont encore en mouvement, hors du point mort.

2. Dispositif selon la revendication 1, caractérisé en ce que l'élément de blocage (29, 45) peut être commandé par le même élément de commutation (20, 20') que celui qui déplace l'élément d'accouplement (12) de la position embrayée à la position débrayée.

3. Dispositif selon la revendication 2, caractérisé en ce que l'élément de commutation (20, 20') présente une dent d'enclenchement (24, 24'), en ce que l'élément d'accouplement (12) comporte un entredent (13, 13') de forme adaptée pour s'engager avec la dent (24, 24') et disposé de telle sorte que cette dernière (24, 24') ne peut pénétrer dans l'entredent (13, 13') que lorsque le disque excentré (9) arrive à sa position de point mort, et en ce qu'une saillie d'enclenchement (36, 49) déverrouillant l'élément de blocage (29, 45) dépasse de telle sorte sur l'entredent (13, 13') qu'elle doit nécessairement être déplacée par la dent (24, 24'), dès que celle-ci pénètre dans l'entredent (13, 13').

4. Dispositif selon la revendication 3, caractérisé en ce que l'élément de blocage (45) affecte la forme d'un cliquet d'arrêt chargé par un ressort et qui est monté pivotant sur l'élément d'accouplement (12), ce cliquet appuyant, en position d'arrêt, par un pied (47) sur un pion (48) solidaire du disque excentré (9), le pied (47) pouvant poursuivre son pivotement par actionnement par le pion (48) de la saillie d'enclenchement (49).

5. Dispositif selon la revendication 3, caractérisé en ce que l'élément de blocage (29) affecte la forme d'un cliquet d'arrêt chargé par un ressort et monté pivotant sur le disque excentré (9), et qui en position d'arrêt appuie par un nez (35) sur l'élément d'accouplement (12), tandis qu'il comporte une saillie d'enclenchement de commutation (36) à chanfrein d'entrée (37), sur laquelle la dent d'enclenchement (24, 24') de l'élément de commutation (20, 20') glisse, dès qu'elle pénètre dans l'entredent (13, 13'), le nez (35) abandonnant alors sa position d'appui.

EP 0 212 273 B1

FIG. 1

EP 0 212 273 B1

FIG. 2

FIG. 3

FIG. 4

FIG. 6

FIG. 5